# DEMANDE DE BREVET EUROPEEN

(11) **EP 3 628 842 A1**
(43) Date de publication de la demande: **01.04.2020**
(21) Numéro de dépôt: 19199979.6
(22) Date de dépôt: 26.09.2019
(51) Int. Cl.: F02C 7/045

(54) **ENSEMBLE COMPORTANT DEUX PANNEAUX ACOUSTIQUES JUXTAPOSÉS DANS LEQUEL LES PANNEAUX COMPORTENT UNE FACE RÉSISTIVE QUI S ÉTEND JUSQU À UNE PAROI D EXTRÉMITÉ**

(30) Priorité: 28.09.2018 FR 1858975
(71) Demandeur: Airbus Operations, 31060 Toulouse (FR)
(72) Inventeur: PORTE, Alain, 31770 COLOMIERS (FR); LALANE, Jacques, 31650 SAINT ORENS DE GAMEVILLE (FR); PONS, François, 31700 DAUX (FR)
(74) Mandataire: Santarelli

(57) **Abrégé**

L'invention porte sur un ensemble comportant deux panneaux acoustiques (1,2) juxtaposés Les faces résistives des panneaux acoustiques sont dans le prolongement l'une de l'autre. Une première face résistive (11) s'étend jusqu'à la première paroi d'extrémité (12) d'un premier panneau. En outre, la première paroi d'extrémité (12) est au contact d'une deuxième paroi d'extrémité (22) d'un deuxième panneau au niveau de la première face résistive (11) et de la deuxième face résistive (21). Une pièce de liaison (5) est interposée entre la première paroi d'extrémité (12) et la deuxième paroi d'extrémité (22) sur une partie de leur longueur de sorte que ladite pièce de liaison (5) ne s'étend pas jusqu'aux première et deuxième faces résistives (11,21). Cela permet la formation d'un revêtement acoustique continu, ne présentant pas de zone non acoustique ou une zone acoustique réduite à la jonction des panneaux acoustiques qui le constitue. Une nacelle d'un groupe propulsif d'aéronef est une application de l'invention.

## Description

La présente invention concerne le domaine des panneaux acoustiques, c'est-à-dire des structures adaptées à l'absorption des ondes acoustiques. Elle concerne plus particulièrement la jonction entre deux panneaux acoustiques.

Les revêtements ou panneaux acoustiques sont employés dans de nombreux domaines techniques, notamment dans le domaine aéronautique. Ils comportent généralement une structure alvéolaire constituée de cellules ou alvéoles, c'est-à-dire de volumes unitaires creux juxtaposés. Ces panneaux, comportant une structure alvéolaire ayant des cellules ouvertes sur une face, ou à tout le moins des cellules communiquant avec l'extérieur du panneau sont employés pour leurs propriétés d'insonorisation.

Ils peuvent être formés en divers matériaux par exemple plastiques, composites, ou métalliques. Les cellules des panneaux acoustiques peuvent présenter diverses géométries. Une forme bien connue de structure alvéolaire présente des cellules en forme de prisme droit de base hexagonale. On parle souvent de structure « en nid d'abeilles » pour désigner ce type de structure à cellules hexagonales, mais cette expression est également employée par abus de langage pour désigner des panneaux alvéolaires présentant d'autres formes de cellules.

Ainsi, un panneau ou revêtement acoustique classique comprend généralement un noyau en nid d'abeilles interposé entre une feuille perforée formant une première face et une feuille pleine appelée peau arrière obturant les cellules ; formant une deuxième face du revêtement, et lui conférant généralement une grande rigidité.

L'invention concerne la jonction entre deux panneaux acoustiques, lorsque deux panneaux doivent être juxtaposés l'un à l'autre pour former une surface de traitement acoustique. Cela peut arriver lorsqu'il est plus économique, ou techniquement plus simple, de joindre deux panneaux (ou plus) que de former une surface de traitement avec un seul panneau acoustique.

Un exemple au travers duquel l'invention va être illustrée ci-après est la jonction entre une partie avant et une partie principale d'une nacelle d'un groupe propulsif d'aéronef.

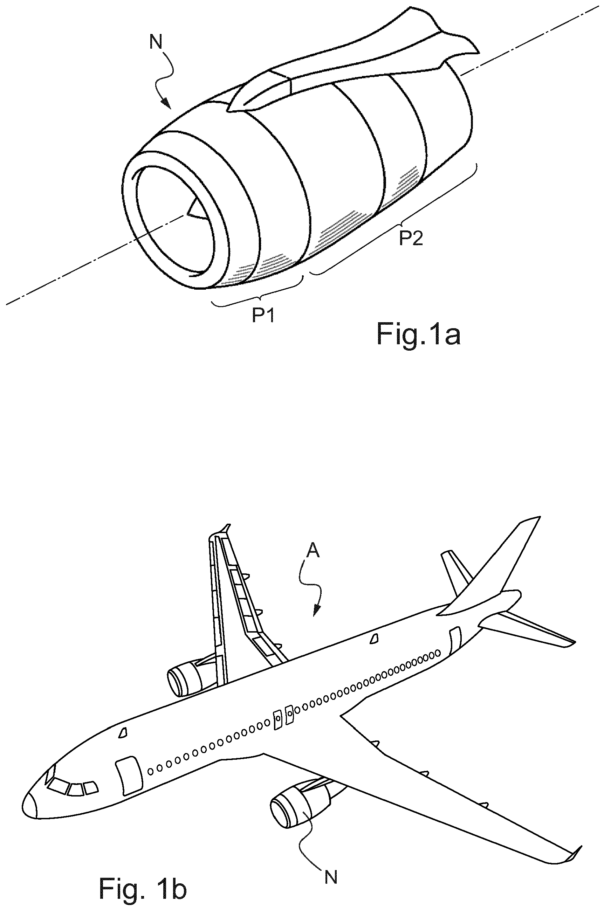

Un ensemble propulsif d'aéronef est représenté à titre d'exemple à la figure 1a. Une nacelle N d'ensemble propulsif d'aéronef comporte classiquement une partie antérieure P1 formant entrée d'air. La partie antérieure P1 a pour rôle de capter l'air de façon à assurer un écoulement régulier vers la soufflante. La nacelle comporte par ailleurs une partie principale P2, constituant le reste de ladite nacelle.

Un exemple d'implantation classique d'une nacelle N sur un aéronef A est représenté à la figure 1b. Des panneaux acoustiques sont employés pour former, au moins en partie, la surface intérieure de la nacelle. Ces panneaux ont pour fonction de limiter les émissions acoustiques du groupe propulsif par absorption des ondes acoustiques générées notamment par le moteur et la soufflante.

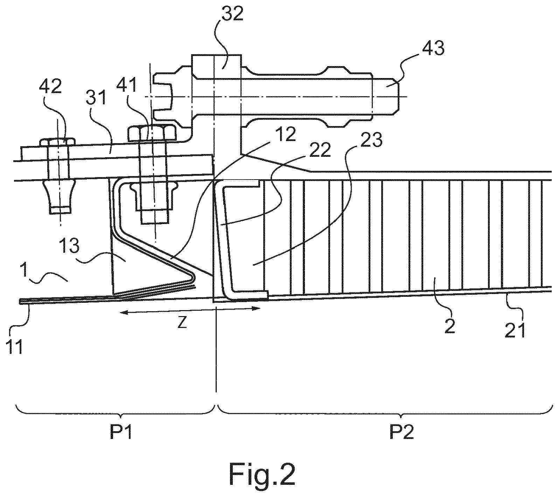

Or, un premier panneau acoustique est situé à l'arrière de la partie antérieure P1, et un deuxième panneau acoustique est situé à l'avant de la partie principale P2. Un exemple de liaison réalisée dans l'état de la technique entre la partie antérieure P1 et la partie principale P2 au niveau du premier panneau acoustique 1 et du deuxième panneau acoustique 2 est représenté à la figure 2.

Le premier panneau acoustique 1 comporte une première face résistive 11. Le deuxième panneau acoustique 2 comporte une deuxième face résistive 21. La face résistive d'un panneau acoustique permet d'atténuer les perturbations du son, et est constituée d'une ou plusieurs couches poreuses (par exemple une plaque perforée).

Le premier panneau acoustique 1 est lié au deuxième panneau acoustique 2 par un ensemble de liaisons réalisées du côté de leur peau arrière. En particulier, une bride de jonction 31 est liée à l'extrémité arrière du premier panneau acoustique 1. La bride de jonction peut par exemple être liée au premier panneau acoustique 1 par divers moyens de fixation, par exemple comportant un système vis-écrou 41 et un système vis-écrou borgne 42.

Une bride dite bride moteur 32 est formée à l'avant du deuxième panneau acoustique 2. La bride de jonction 31 est liée rigidement à la bride moteur par des moyens de liaisons, par exemple des boulons 43 répartis sur le pourtour des brides.

Afin de fermer les panneaux acoustiques, de leur fournir une certaine conformation et une certaine résistance mécanique, et aussi pour permettre la fixation des brides, les extrémités respectives des panneaux acoustiques présentent généralement une paroi derrière laquelle un volume est rempli lors de la fabrication du panneau.

Ainsi, le premier panneau présente à son extrémité, le long d'un de ses bords, une première paroi d'extrémité 12 et une première zone pleine 13. Le deuxième panneau présente à son extrémité, le long d'un de ses bords, une deuxième paroi d'extrémité 22 et une deuxième zone pleine 23.

La paroi d'extrémité 12 est conformée pour permettre la fixation de la bride de jonction, et notamment la mise en place du système vis-écrou 41. Il résulte de cette configuration, que l'extrémité du premier panneau acoustique 1 ne permet pas l'absorption d'ondes acoustiques, sur la longueur de la première paroi d'extrémité 12 et de la première zone pleine 13. De même, l'extrémité du deuxième panneau acoustique 2 ne permet pas l'absorption d'ondes acoustiques au niveau de la deuxième paroi d'extrémité 22 et de la deuxième zone pleine 23.

Ainsi, au niveau de la jonction entre le premier panneau 1 et le deuxième panneau 2, les extrémités sans propriété acoustique des panneaux se cumulent et forment une zone dite zone non-acoustique Z.

L'objectif de l'invention est de limiter voire de supprimer la zone non acoustique à la jonction entre deux panneaux acoustiques.

Ainsi, l'invention porte sur un ensemble comportant un premier panneau acoustique et un deuxième panneau acoustique juxtaposés. Un premier bord du premier panneau acoustique formé par une première paroi d'extrémité est joint à un deuxième bord du deuxième panneau acoustique formé par une deuxième paroi d'extrémité. Le premier panneau acoustique comporte une première face résistive et le deuxième panneau acoustique comporte une deuxième face résistive. La première face résistive et la deuxième face résistive sont dans le prolongement l'une de l'autre. Le premier bord est creux. La première face résistive s'étend jusqu'à la première paroi d'extrémité. La première paroi d'extrémité est au contact de la deuxième paroi d'extrémité au niveau de la première face résistive et de la deuxième face résistive. Une pièce de liaison est interposée entre la première paroi d'extrémité et la deuxième paroi d'extrémité sur une partie de leur longueur respective depuis une première peau arrière du premier panneau acoustique et une deuxième peau arrière du deuxième panneau acoustique, de sorte que ladite pièce de liaison ne s'étend pas jusqu'aux première et deuxième faces résistives.

Avantageusement, le deuxième bord est creux et la deuxième face résistive s'étend jusqu'à la deuxième paroi d'extrémité.

Dans l'ensemble ainsi formé, les faces résistives sont non seulement dans le prolongement l'une de l'autre, mais elles sont également juxtaposées sans autre zone non acoustique entre elles que celle formée par l'épaisseur des première et deuxième parois d'extrémité. L'épaisseur de ces parois est d'ailleurs négligeable comparativement aux autres dimensions des panneaux, de sorte que l'ensemble forme en pratique une seule zone acoustique continue.

La pièce de liaison peut comporter une première branche et une deuxième branche qui s'étend à distance desdites première et deuxième faces résistives, de sorte qu'au moins l'un des premier et deuxième bords comporte une cavité extrémale formée entre la première ou la deuxième face résistive et la deuxième branche de la pièce de liaison.

La deuxième branche peut être parallèle à la première et à la deuxième face résistive.

La pièce de liaison peut comporter une section sensiblement en L.

Alternativement, la pièce de liaison peut comporter une section sensiblement en T.

La pièce de liaison peut comporter une troisième branche. Elle peut être parallèle à la deuxième branche.

Chaque panneau acoustique peut comporter une structure alvéolaire comportant des cellules ayant sensiblement le même volume, et lesdites première et deuxième parois d'extrémité peuvent former des volumes respectivement dans le premier bord et le deuxième bord, lesdits volumes ainsi formés étant supérieurs au volume des cellules.

L'invention porte également sur un revêtement insonorisant formé d'un ou plusieurs ensembles tels que précédemment décrits. L'invention porte aussi sur une nacelle d'un groupe propulsif d'aéronef comportant un tel revêtement formant une surface interne de ladite nacelle. Enfin, l'invention porte sur un aéronef comportant une telle nacelle.

D'autres particularités et avantages de l'invention apparaîtront encore dans la description ci-après.

Aux dessins annexés, donnés à titre d'exemples non limitatifs :
- la figure 1a représente selon une vue schématique en trois dimensions une nacelle d'un ensemble propulsif d'aéronef ;
- la figure 1b représente selon une vue schématique en trois dimensions un aéronef ;
- la figure 2 représente selon une vue partielle en coupe un exemple de liaison réalisée selon l'état de la technique entre une partie antérieure et une partie principale de nacelle d'un ensemble propulsif d'aéronef ;
- la figure 3 représente selon un schéma de principe en coupe, un exemple de liaison réalisée selon l'état de la technique entre un premier panneau acoustique et un deuxième panneau acoustique ;
- la figure 4 représente selon un schéma de principe en coupe, un deuxième exemple de liaison réalisée selon l'état de la technique entre un premier panneau acoustique et un deuxième panneau acoustique ;
- la figure 5 représente selon un schéma de principe en coupe, un troisième exemple de liaison réalisée selon l'état de la technique entre un premier panneau acoustique et un deuxième panneau acoustique ;
- la figure 6 représente selon un schéma de principe en coupe, un quatrième exemple de liaison réalisée selon l'état de la technique entre un premier panneau acoustique et un deuxième panneau acoustique ;
- la figure 7a représente selon un schéma de principe en coupe, une liaison réalisée selon un premier mode de réalisation de l'invention entre un premier panneau acoustique et un deuxième panneau acoustique ;
- la figure 7b représente selon une vue analogue une variante du mode de réalisation de la figure 7a ;
- la figure 7c représente selon une vue analogue une variante du mode de réalisation des figures 7a et 7b ;
- la figure 8 représente selon un schéma de principe en coupe, une liaison réalisée selon un deuxième mode de réalisation de l'invention entre un premier panneau acoustique et un deuxième panneau acoustique ;
- la figure 9a représente selon un schéma de principe en coupe, une liaison réalisée selon un troisième mode de réalisation de l'invention entre un premier panneau acoustique et un deuxième panneau acoustique ;
- la figure 9b représente selon une vue analogue une variante du mode de réalisation de la figure 9a ; et
- la figure 10 représente selon un schéma de principe en coupe, une liaison réalisée entre un premier panneau acoustique et un deuxième panneau acoustique.

Les figures 1a, 1b et 2 représentant respectivement une nacelle d'un ensemble propulsif d'aéronef et la liaison entre deux parties constitutives d'une telle nacelle au niveau de panneaux acoustiques qu'elle comporte ont été décrites ci-avant en référence à l'état de la technique antérieure à l'invention.

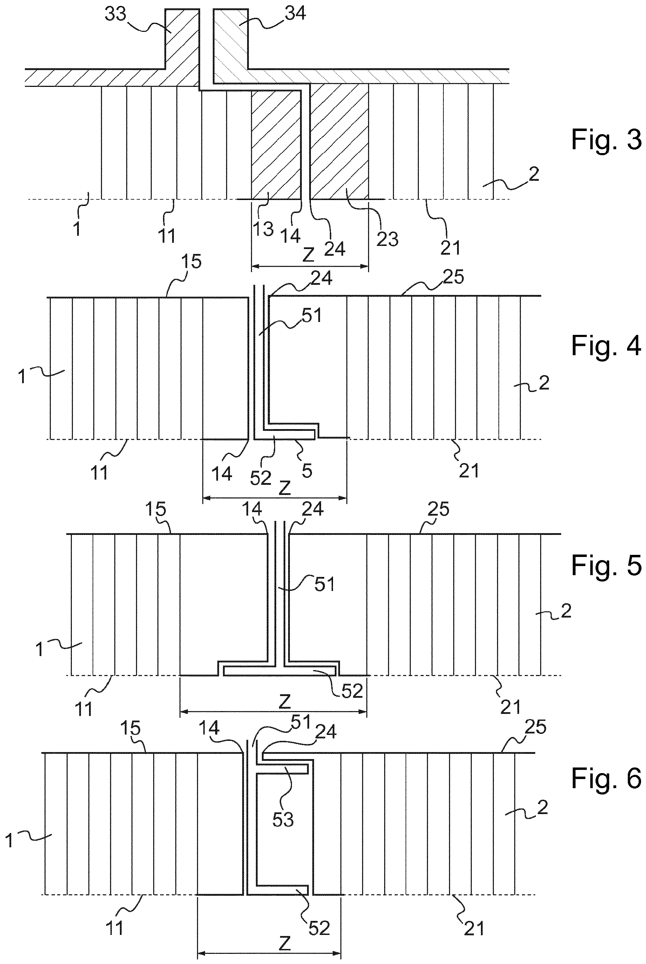

Différentes manières connues de réaliser une jonction entre deux panneaux acoustiques sont illustrées aux figures 3 à 6. Tout comme la figure 2, les figures 3 à 6 sont des vues en coupe selon un plan de coupe à la fois orthogonal aux première et deuxième faces résistives 11, 21 des premier et deuxième panneaux acoustiques 1, 2 et orthogonal à un premier bord 14 du premier panneau et un deuxième bord 24 du deuxième panneau.

Le schéma de principe représenté à la figure 3 illustre la liaison entre un premier panneau acoustique 1 et un deuxième panneau acoustique 2. Selon ce mode de liaison, tout comme dans l'exemple de la figure 2, une première bride 33 (pouvant correspondre à la bride de jonction 31) liée au premier panneau acoustique 1 est fixée à une deuxième bride 34 (pouvant correspondre à la bride moteur 32) liée au deuxième panneau acoustique 2.

La première surface résistive 11 du premier panneau acoustique et la deuxième surface résistive 12 du deuxième panneau acoustique s'étendent dans un même plan. Elles sont ainsi dans le prolongement l'une de l'autre. Les première et deuxième faces résistives sont perforées (ou au moins poreuses) de sorte à mettre en communication la structure interne des panneaux acoustiques avec le milieu externe aux panneaux.

Le premier panneau acoustique 1 comporte à son extrémité une première zone pleine 13, qui forme le premier bord 14 du premier panneau. Le deuxième panneau acoustique comporte à son extrémité une deuxième zone pleine 23 qui forme le deuxième bord 24 du deuxième panneau. La juxtaposition de la première zone pleine 13 et de la deuxième zone pleine 23 crée ainsi une zone non acoustique Z importante entre la première face résistive 11 et la deuxième face résistive 21.

Selon d'autres façons connues de lier un premier panneau acoustique 1 à un deuxième panneau acoustique 2, une pièce de liaison 5 est interposée entre le premier bord 14 du premier panneau acoustique 1 et le deuxième bord 24 du deuxième panneau acoustique 2.

Les figures 4 à 6 représentent diverses liaisons entre un premier panneau acoustique 1 et un deuxième panneau acoustique 2 réalisées selon des modes de réalisation connus dans l'état de la technique mettant en œuvre une pièce de liaison 5.

Les pièces de liaison 5 peuvent présenter diverses sections schématisées aux figures 4 à 6 afin de permettre la liaison entre le premier panneau acoustique 1 et le deuxième panneau acoustique 2. Dans l'exemple de la figure 4, la pièce de liaison 5 présente une section sensiblement en L. La branche horizontale du L s'étend dans le plan des première et deuxième faces résistives 11, 21. Dans l'exemple de la figure 5, la pièce de liaison 5 présente une section sensiblement en T. La branche horizontale du T s'étend dans le plan des première et deuxième faces résistives 11, 21. Dans l'exemple de la figure 6, la pièce de liaison 5 comporte une section à trois branches, à savoir une première branche 51 perpendiculaire aux première et deuxième faces résistives 11, 21, une deuxième branche 52 et une troisième branche 53 parallèles aux première et deuxième faces résistives 11, 21.

Les diverses pièces de liaisons 5 connues dans l'état de la technique ont en commun de s'étendre depuis une première peau arrière 15 du premier panneau acoustique 1 jusqu'au niveau de la première face résistive 11, et, en correspondance depuis une deuxième peau arrière 25 du deuxième panneau acoustique 2 jusqu'au niveau de la deuxième face résistive (qui correspond d'ailleurs au plan d'extension de la première face résistive 11). Les diverses pièces de liaison 5 connues dans l'état de la technique ont également en commun de comporter, en section, une première branche 51 perpendiculaire aux première et deuxième faces résistives 11, 21, et une deuxième branche 52 qui s'étend dans le plan des première et deuxième faces résistives 11, 21.

Ainsi, la surface sur laquelle s'étend la deuxième branche 52 est une zone qui n'a pas de propriété acoustique située entre le premier panneau acoustique 1 et le deuxième panneau acoustique 2. La zone non acoustique Z peut être formée de cette surface, et le cas échéant être élargie par les zones, pleines ou creuses situées dans les premier et deuxième panneaux acoustiques 1, 2 à proximité du premier bord 14 et du deuxième bord 24.

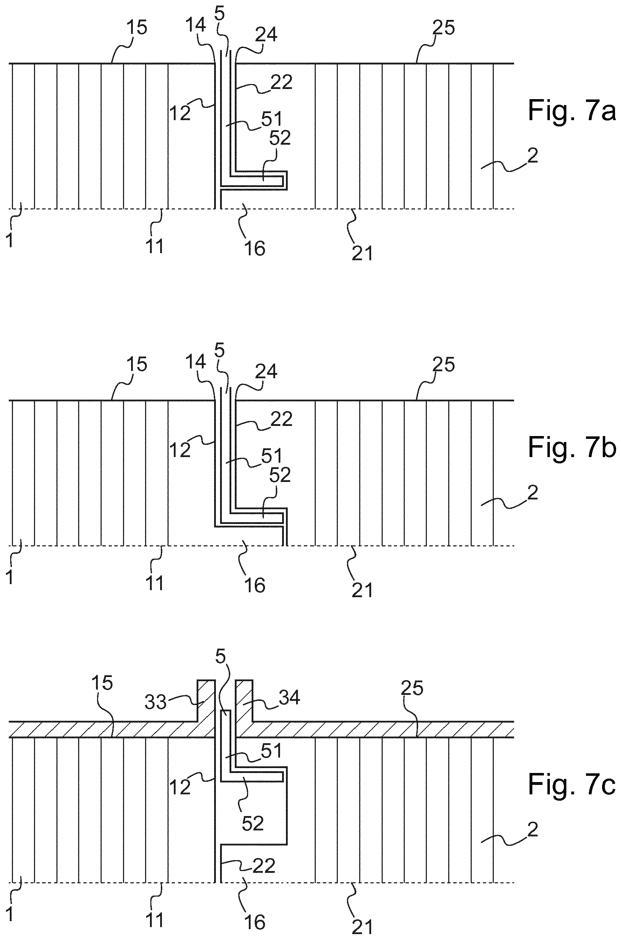

Les figures 7a à 9b représentent, selon des schémas de principe en coupe analogues à ceux des figures 3 à 6, des exemples non-exhaustifs de modes de réalisation de l'invention.

Ainsi, un premier panneau acoustique 1 est juxtaposé à un deuxième panneau acoustique 2.

En particulier, afin de former un ensemble constituant une large surface acoustique, le premier bord 14 du premier panneau acoustique 1 est joint au deuxième bord 24 du deuxième panneau acoustique 2. Le premier bord 14 est formé par une première paroi d'extrémité 12. De manière analogue, le deuxième bord 24 est formé par une deuxième paroi d'extrémité 22.

Dans l'invention, le premier bord 14 est creux, au moins à proximité du plan d'extension des première et deuxième faces résistives 11, 21. Dans les exemples de modes de réalisation représentés, le deuxième bord est également creux, au moins à proximité du plan d'extension des première et deuxième faces résistives 11, 21.

La première face résistive 11 s'étend jusqu'à la première paroi d'extrémité 12. En particulier, des perforations sont ainsi ménagées jusqu'à la première paroi d'extrémité 12. Les perforations de la première face résistive 11 situées à proximité de la première paroi d'extrémité 12 s'ouvrent ainsi dans une cavité extrémale 16 située dans le premier bord creux.

De même, la deuxième face résistive 21 s'étend jusqu'à la deuxième paroi d'extrémité 22. Les perforations de la deuxième face résistive 21 situées à proximité de la première paroi d'extrémité 12 s'ouvrent ainsi dans une cavité extrémale 16 située dans le premier bord creux.

Ainsi, le premier panneau acoustique 1 et le deuxième panneau acoustique ont un effet acoustique d'absorption d'ondes acoustiques jusqu'à leur paroi d'extrémité respective.

La première paroi d'extrémité 12 est au contact de la deuxième paroi d'extrémité au niveau de la première face résistive et de la deuxième face résistive, c'est-à-dire au niveau du plan d'extension de la première et de la deuxième face résistive 11,21. Ainsi, la première face résistive 11 et la deuxième face résistive 21 forment quasiment une surface résistive interrompue.

Les exemples de mode de réalisation de l'invention représentés aux figures 7 à 9 mettent en œuvre une pièce de liaison 5 qui est interposée entre la première paroi d'extrémité 12 et la deuxième paroi d'extrémité 22.

Contrairement aux pièces de liaison connues dans l'état de la technique, les pièces de liaison 5 mises en œuvre ne s'interposent entre la première paroi d'extrémité 12 et la deuxième paroi d'extrémité 22 que sur une partie de leur longueur respective. Ainsi, la pièce de liaison des modes de réalisation des figures 7 à 9 s'étend depuis la première peau arrière 15 du premier panneau acoustique 1 et depuis la deuxième peau arrière 25 du deuxième panneau acoustique 2, mais ne s'étend pas jusqu'aux première et deuxième faces résistives.

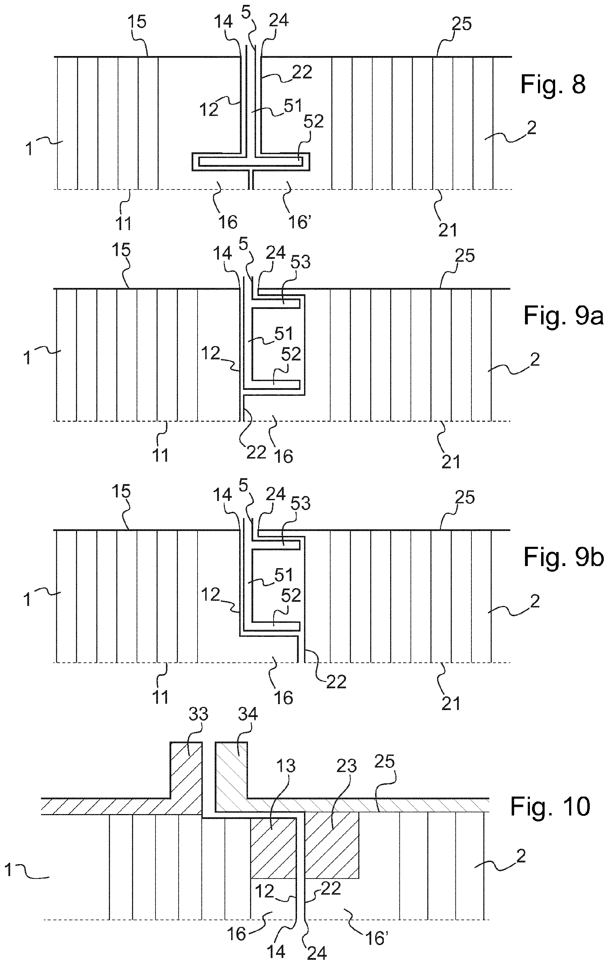

Les pièces de liaisons représentées aux figures 7a à 9b ont une configuration analogue à celles des pièces de liaison mises en œuvre aux figures 4 à 6 respectivement. En particulier, la pièce de liaison 5 du mode de réalisation des figures 7a, 7b et 7c présente une section sensiblement en L. La pièce de liaison 5 du mode de réalisation de la figure 8 présente une section sensiblement en T. La pièce de liaison 5 du mode de réalisation des figures 9a et 9b comporte une section à trois branches, à savoir une première branche 51 perpendiculaire aux première et deuxième faces résistives 11, 21, une deuxième branche 52 et une troisième branche 53 parallèles aux première et deuxième faces résistives 11, 21.

Dans les modes de réalisation des figures 7a à 9b, la deuxième branche 52 de la pièce de liaison 5 s'étend ainsi parallèlement et à distance des faces résistives 11, 21.

Dans la mesure où les parois d'extrémité 12, 22 sont au contact l'une de l'autre au niveau des faces résistives 11, 21, une cavité extrémale 16 est formée entre la première face résistive 11 et la deuxième branche 52 de la pièce de liaison, et/ou entre la deuxième face résistive 22 et la deuxième branche 52 de la pièce de liaison.

Notamment, dans l'exemple des figures 7a, 7c et 9a, une cavité extrémale 16 est formée entre la deuxième face résistive 22 et la deuxième branche 52 de la pièce de liaison.

Notamment, dans l'exemple des figures 7b et 9b, une cavité extrémale 16 est formée entre la première face résistive 11 et la deuxième branche 52 de la pièce de liaison. Dans l'exemple de la figure 8, une cavité extrémale 16 est formée entre la première face résistive 11 et la deuxième branche 52 de la pièce de liaison et une autre cavité extrémale 16' est formée entre la deuxième face résistive 22 et la deuxième branche 52 de la pièce de liaison.

La figure 7c représente une variante de liaison de la figure 7a, dans laquelle la pièce de liaison 5 en L prend appui en partie haute du deuxième panneau acoustique 2. Cette variante permet de créer un pincement du deuxième panneau acoustique entre la pièce de liaison 5 et la deuxième bride 34 (qui peut correspondre à la bride moteur 32) et de faciliter la fixation de la pièce de liaison 5 sur la deuxième bride 34. Une adaptation similaire est applicable aux modes de réalisation des figures 7b et 8.

Les premier et deuxième panneaux acoustiques 1, 2 présentent ainsi des propriété acoustiques (capacité à absorber des ondes acoustiques) jusqu'à leurs extrémités qui sont en contact l'une de l'autre au niveau de leur face résistive, c'est-à-dire dans leur plan d'extension, formant ainsi en pratique une surface acoustique continue.

La liaison représentée à la figure 10 correspond à une optimisation de la liaison entre deux panneaux acoustiques selon l'art antérieur représentée à la figure 3.

En particulier, une cavité extrémale 16 est formée dans le premier panneau acoustique 1 entre la première zone pleine 13 et la première face résistive 11, rendant ainsi creux le premier bord 14. Une autre cavité extrémale 16' est formée, dans l'exemple représenté, dans le premier panneau acoustique 1 entre la deuxième zone pleine 23 et la deuxième face résistive 21, rendant ainsi creux le deuxième bord 24. En particulier, dans l'art antérieur les extrémités des panneaux acoustiques étaient remplies essentiellement pour en faciliter la fabrication. En effet, ce remplissage permet notamment la mise en place aisée de la peau arrière 25. Il est proposé dans la liaison illustrée à la figure 10 de ne remplir que la partie haute de l'extrémité du panneau acoustique, afin de créer la cavité extrémale 16 tout en conservant la facilité de mise en place de la peau arrière. Cette caractéristique est applicable aux différents modes de réalisation de l'invention, notamment ceux représentés aux figures 7a à 9b. Une telle configuration permet ainsi de supprimer la zone non-acoustique au niveau de la liaison entre le premier panneau et le deuxième panneau, tout en conservant la fonction assurée par la zone remplie dans l'art antérieur.

Dans tous les modes de réalisation de l'invention, les volumes formés dans les bords creux respectivement du premier panneau acoustique et du deuxième panneau acoustique peuvent être adaptés selon les fréquences des ondes acoustiques à absorber. Ils peuvent en particulier être dimensionnés pour absorber les ondes acoustiques sur les mêmes plages de fréquence que le reste des panneaux acoustiques. Au contraire, ces volumes peuvent être dimensionnés pour être efficaces sur d'autres plages de fréquence, par exemple sur des fréquences plus basses. Cela peut être obtenu par l'adoption de volumes de cavité supérieure au volume des alvéoles des panneaux acoustiques.

Enfin, l'invention a été illustrée aux moyens de coupes transversales des panneaux acoustiques. Elle s'applique à des panneaux plats, mais peut également être appliquée à la jonction de panneaux courbes. Cela est notamment le cas dans une nacelle de groupe propulsif d'aéronef, qui comporte une surface interne présentant une ou plusieurs zones annulaires d'absorption acoustique.

L'invention ainsi développée permet une jonction entre des panneaux acoustiques limitant ou supprimant la zone non-acoustique (dénués de propriété d'absorption des ondes acoustiques) entre lesdits panneaux acoustiques. Elle permet la formation d'un revêtement acoustique par jonction de plusieurs panneaux acoustiques, le revêtement ainsi formé se comportant sensiblement comme un panneau acoustique unique et continu. L'invention est applicable dans de nombreux domaines techniques, et notamment en aéronautique. Elle est notamment applicable à de nombreux éléments d'un aéronef soumis à des ondes acoustiques qu'il convient de réduire pour le confort des passagers et pour limiter les émissions sonores de l'aéronef.

Une application préférentielle de l'invention est la constitution d'un revêtement acoustique interne à une nacelle de groupe propulsif d'aéronef.

## Revendications

1. Ensemble comportant un premier panneau acoustique (1) et un deuxième panneau acoustique (2) juxtaposés, un premier bord (14) du premier panneau acoustique (1) formé par une première paroi d'extrémité (12) étant joint à un deuxième bord (24) du deuxième panneau acoustique (2) formé par une deuxième paroi d'extrémité (22),
le premier panneau acoustique (1) comportant une première face résistive (11) et le deuxième panneau acoustique (2) comportant une deuxième face résistive (21), la première face résistive (11) et la deuxième face résistive (21) étant dans le prolongement l'une de l'autre,
dans lequel le premier bord (14) étant creux, la première face résistive (11) s'étend jusqu'à la première paroi d'extrémité (12),
et dans lequel la première paroi d'extrémité (12) est au contact de la deuxième paroi d'extrémité (22) au niveau de la première face résistive (11) et de la deuxième face résistive (21),
**caractérisé en ce qu'**une pièce de liaison (5) est interposée entre la première paroi d'extrémité (12) et la deuxième paroi d'extrémité (22) sur une partie de leur longueur respective depuis une première peau arrière (15) du premier panneau acoustique (1) et une deuxième peau arrière (25) du deuxième panneau acoustique (2), de sorte que ladite pièce de liaison (5) ne s'étend pas jusqu'aux première et deuxième faces résistives (11,21).

2. Ensemble selon la revendication 1, dans lequel le deuxième bord est creux et la deuxième face résistive (21) s'étend jusqu'à la deuxième paroi d'extrémité (22).

3. Ensemble selon la revendication 1 ou la revendication 2, dans lequel la pièce de liaison comporte une première branche (51) et une deuxième branche (52) qui s'étend à distance desdites première et deuxième faces résistives (11,21),
de sorte qu'au moins l'un des premier et deuxième bords (14,24) comporte une cavité extrémale (16, 16') formée entre la première ou la deuxième face résistive (11,21) et la deuxième branche (52) de la pièce de liaison (5).

4. Ensemble selon la revendication 3, dans lequel la pièce de liaison (5) comporte une section sensiblement en L ou une section sensiblement en T.

5. Ensemble selon la revendication 3, dans lequel la pièce de liaison (5) comporte une troisième branche (53).

6. Ensemble selon l'une des revendications précédentes, dans lequel chaque panneau acoustique (1,2) comporte une structure alvéolaire comportant des cellules ayant sensiblement le même volume, et dans lequel lesdites première et deuxième parois d'extrémité (12,22) forment des volumes respectivement dans le premier bord (14) et le deuxième bord (24), lesdits volumes ainsi formés étant supérieurs au volume des cellules.

7. Revêtement insonorisant formé d'un ou plusieurs ensembles selon l'une des revendications précédentes.

8. Nacelle d'un groupe propulsif d'aéronef comportant un revêtement selon la revendication 7 formant une surface interne de ladite nacelle.

9. Aéronef (A) comportant une nacelle (N) selon la revendication 8.
